# EUROPÄISCHE PATENTSCHRIFT

(11) **EP 2 180 990 B1**
(45) Veröffentlichungstag und Bekanntmachung des Hinweises auf die Patenterteilung: **05.01.2011**
(21) Anmeldenummer: 08784933.7
(22) Anmeldetag: 22.07.2008
(51) Int. Cl.: B29C 49/72, B26D 5/08, B26F 1/38

(54) **TRENNVORRICHTUNG**
SEPARATING DEVICE
DISPOSITIF DE SÉPARATION

(30) Priorität: 28.08.2007 DE 102007040472
(43) Veröffentlichungstag der Anmeldung: 05.05.2010
(73) Patentinhaber: Hansen, Bernd, 74429 Sulzbach-Laufen (DE)
(72) Erfinder: Hansen, Bernd, 74429 Sulzbach-Laufen (DE)
(74) Vertreter: Bartels, Martin Erich Arthur
(86) Internationale Anmeldenummer: PCT/EP2008/005968
(87) Internationale Veröffentlichungsnummer: WO 2009/030311

(56) Entgegenhaltungen:
- DE-C1- 3 831 957
- US-A1- 2005 000 331

## Beschreibung

Die Erfindung betrifft eine Trennvorrichtung zum Abtrennen einzelner Behältererzeugnisse aus einem Rahmenverbund, der aus einem Kunststoffmaterial, insbesondere aus Polypropylen, besteht, mit mindestens einer Stanzeinrichtung, die zumindest teilweise das jeweilige Behältererzeugnis von einem Rahmenabfall trennt.

Im Stand der Technik (DE 199 26 329 A1) sind Verfahren und Vorrichtungen zum Herstellen von Behältererzeugnissen aus Kunststoff bekannt, wie sie einer gattungsgemäßen Trennvorrichtung zugeführt werden, die dem Abtrennen der dahingehenden einzelnen Behältererzeugnisse aus einem Rahmenverbund unter Einsatz einer Schneid- oder Stanzeinrichtung dient. Zum Herstellen des jeweiligen Behältererzeugnisses wird ein Schlauch plastifizierten Kunststoffmaterials in eine Formeinrichtung hinein extrudiert, das eine Ende des Schlauches durch Verschweißen verschlossen und durch Erzeugen eines am Schlauch wirkenden pneumatischen Druckgradienten dieser aufgeweitet und zur Bildung des Behälters an die formgebende Wand der Formeinrichtung, bestehend aus zwei gegenüberliegenden Formwerkzeugen, angelegt. Über einen entsprechenden Fülldorn wird dann der Kunststoffbehälter steril innerhalb der Formeinrichtung befüllt und nach Entnahme des Fülldornes anschließend hermetisch unter Bildung einer vorgebbaren Kopfgeometrie verschlossen, wobei für die Bildung des eigentlichen Kunststoffbehälters, in dem später das Fluid bevorratet ist, zwei Behälterformgebungsbacken mittels hydraulischer Antriebsmittel für den Erhalt einer Schließstellung aufeinander zu und in eine ihrer Öffnungsstellungen voneinander gegenläufig weg bewegbar sind. Um hier zu sehr hohen Ausstoßraten an Behältererzeugnissen zu gelangen, ist in der DE 103 23 335 A1 eine Mehrstationenanordnung beschrieben und durch das Aufteilen verschiedener Formgebungsschritte an verschiedene, auf einem fiktiven Kreisbogen hintereinander angeordnete Stationen ist eine Art Karussell-Anordnung geschaffen, die sehr hohe Taktfrequenzen für das auszustoßende Kunststoffgut in Form der Behältererzeugnisse ermöglicht.

Da das in das jeweilige Behältererzeugnis einzufüllende Füllgut gegenüber Umgebungsmedien häufig sehr anfällig ist, insbesondere wenn es sich beispielsweise um ein hochsensibles Pharmazeutikum handelt, wird im Stand der Technik darauf geachtet, dass man beispielsweise die Füllöffnung des Behälterschlauches zumindest von ihrer Bildung bis zum Befüllen des zugehörigen Behälters unter einem Sterilraum durch eine sterile Barriere abdeckt, wobei sich sehr gute Ergebnisse hierbei realisieren lassen, wenn man, wie in der DE 10 2004 004 755 A1 aufgezeigt, mittels der genannten Barriere ein steriles Medium unter Einsatz einer Medienfördereinrichtung in Richtung der Behälterfüllöffnung verbringt, um so die Keimfreiheit noch weiter zu verbessern. Eine andere oder zusätzliche Maßnahme zur Erhöhung der Sterilität ist, einfach höhere Verarbeitungstemperaturen beispielsweise bei der Schlaucherstellung für das Behältererzeugnis oder während des Einfüllens des Füllgutes vorzusehen, wobei eine erhöhte Verarbeitungstemperatur ihre Grenzen findet, wenn das häufig eingesetzte Kunststoffmaterial, wie Polyethylen, temperaturempfindlich ist, das sich im übrigen jedoch in dahingehenden Herstellvorrichtungen sehr gut verarbeiten läßt und insoweit bevorzugt wird.

Im übrigen können neben dem Luftsauerstoff auch sonstige Gase später bei der Lagerung und dem Vertrieb des steril hergestellten Behältererzeugnisses durch die dünne Polyethylenwand ins Innere des Behälters hinein diffundieren und dergestalt den empfindlichen Behälterinhalt schädigen oder gar unbrauchbar machen.

Um diesem letztgenannten Nachteil zu begegnen, sind im Stand der Technik bereits Herstellverfahren für dahingehende Behältererzeugnisse vorgeschlagen worden (DE 103 47 907 A1 und DE 103 47 908 A1), die sog. Coextrusions-Herstellverfahren betreffen, bei denen der Behälter aus mehreren Schichten an Kunststoffmaterialien aufgebaut wird, wobei häufig mindestens eine der Schichten als Sperrschicht eingesetzt wird. Dabei können durchaus fünf und mehr Schichten, beispielsweise gebildet aus Polyethylen und Low-Density-Polyethylen sowie Copolymeren (Ethylen-Vinylalkohol-Copolymer) die mehrlagige Behälterwand bilden, die insoweit dann eine wirksame Sperrschicht ausbildet; jedoch sind die dahingehenden Verfahren in der praktischen Umsetzung kostenintensiv, was das jeweilige Behältererzeugnis entsprechend verteuert.

Sofern die einzelnen Behältererzeugnisse befüllt aus der jeweiligen Herstellmaschine kommen, liegen diese in der Art eines Ampullenblocks vor, bei dem mehrere, nebeneinanderliegende Ampullen bzw. Behälter in der Art eines Block- oder Rahmenverbundes eine gemeinsame Wandung aufweisen. Um die Behälter oder Ampullen aus dem Block- oder Rahmenverbund zu lösen, werden diese entlang von Randzonen ausgeschnitten oder ausgestanzt, wobei insoweit dann eine gewisse Menge an Rahmenabfall entsteht, der aber mit modernen Techniken recycelbar ist. Durch die DE-PS 38 31 957 ist ein Verfahren zum Herstellen von hohlen Behältererzeugnissen aus Kunststoffen bekannt, die als Ampullenblock oder Rahmenverbund zunächst vorliegen, wobei in einer Randzone des Rahmenabfalls zusätzlich ein Hohlkörper eingeformt wird, was die Stabilität im Rahmenverbund erhöht und unter anderem die Trennung von Behältererzeugnis zu Rahmenabfall mittels der jeweils eingesetzten Trennvorrichtung erleichtern hilft.

Durch die US 2005/0000331 A1 ist eine gattungsgemäße Trennvorrichtung zum Abtrennen einzelner Behältererzeugnisse aus einem Rahmenverbund bekannt, der aus einem Kunststoffmaterial besteht mit mindestens einer Stanzeinrichtung, die zumindest teilweise das jeweilige Behältererzeugnis von einem Rahmenabfall trennt. Bei der bekannten Lösung werden verschiedene Arbeitszylinder eingesetzt, die das Ausstanzen im skizzierten Rahmen ermöglichen.

Ausgehend von diesem Stand der Technik liegt der Erfindung die Aufgabe zugrunde, eine Trennvorrichtung zu schaffen, mit der mit hoher Geschwindigkeit sich die Trennung der Behältererzeugnisse - gleichgültig aus welchem Kunststoffmaterial bestehend - vom Rahmenverbund erreichen läßt und die neben einem hohen Maß an Funktionssicherheit auch relativ geringe Herstellkosten aufweist. Eine dahingehende Aufgabe löst eine Trennvorrichtung mit den Merkmalen des Patentanspruches 1 in seiner Gesamtheit.

Dadurch, dass gemäß dem kennzeichnenden Teil des Patentanspruches 1 die Stanzeinrichtung der Trennvorrichtung einen Freifallkörper aufweist, der aus einer Ausgangsstellung heraus im freien Fall den jeweiligen Rahmenabfall vom jeweiligen Behältererzeugnis trennt, läßt sich mit sehr hoher Geschwindigkeit (freier Fall) die Trennung vornehmen und zusätzliche mechanische Komponenten zum Ausüben einer Zwangskraft auf den Stanzkörper bei der Trennlinienerstellung können entfallen. Letztendlich muß der Freifallkörper nur immer wieder angehoben werden, was beispielsweise mittels pneumatischer Arbeitszylinder erfolgen kann, was gleichfalls rasch vonstatten geht und wenig Einsatzenergie benötigt.

Insbesondere hat sich gezeigt, dass sich mit der erfindungsgemäßen Trennvorrichtung Polypropylen als Wandmaterial für die Behältererzeugnisse einsetzen läßt; ein gegenüber einem Polyethylenwerkstoff derart sprödes Kunststoffmaterial, das sich nur schwer mit den konventionellen Stanz- und Schneideinrichtungen zur Behältertrennung bearbeiten läßt. Sofern konventionelle Trennvorrichtungen zum Einsatz kommen, hat es sich gezeigt, dass man im Hinblick auf die sehr hohen Verarbeitungstemperaturen des Polypropylens mehrere Minuten warten müßte, bis der Stanz- oder Schneidvorgang überhaupt möglich ist. Dies führt dann aber zwangsläufig dazu, dass man für die zu trennenden Behältererzeugnisse sehr lange Staustrecken und/oder zusätzliche Kühleinrichtungen benötigt, um die Trennung ausschußfrei überhaupt vornehmen zu können. Aufgrund des Freifallkörpers der Stanzeinrichtung kann ohne solche Wartezeiten oder Kühlzusatzeinrichtungen eine saubere Trennung erfolgen, indem man das jeweilige Behältererzeugnis aus dem noch sehr warmen oder heißen Rahmenverbund mit hoher Geschwindigkeit über den Freifallkörper mit seinen vorstehenden Stanzflächen einfach abschlägt. Es ist für einen Durchschnittsfachmann auf dem Gebiet solcher Trennvorrichtungen überraschend, dass er mit relativ stumpf gehaltenen Stanzschneiden, die nicht weiter nachbearbeitet (geschliffen) oder gewartet werden müssen, zu derart sauberen Trennstanzlinien gelangt, was so mit den Mitteln im Stand der Technik bisher nicht möglich war.

Der Vorteil des Einsatzes von Polypropylenmaterial anstelle von Polyethylen oder einem coextrudierten Mehrlagenverbund, bestehend aus LDPE/MDPE, liegt darin, dass man das Polypropylenmaterial bei höheren Temperaturen (121°C) autoklavieren kann, wobei das Polypropylenmaterial aus nur einem Extrusionskopf deutlich günstiger zu erhalten ist als die beschriebenen Mehrlagensysteme. So benötigt letztendlich jede herzustellende Einzelschicht im Mehrlagensystem einen eigenen Extrusionskopf in der Herstellmaschine, was den Herstellaufwand auch von der Steuerungsseite her entsprechend erhöht.

Sofern die erfindungsgemäße Trennvorrichtung mit Stanzeinrichtung und Freifallkörper für Polypropylenmaterial zum Einsatz kommt, ist die dahingehende Anwendung hierauf nicht eingeschränkt; vielmehr gibt es hier eine Vielzahl an Einsatzmöglichkeiten und die erfindungsgemäße Trennvorrichtung kann auch für sonstige Kunststoffmaterialien, wie Polyethylen oder Kunststoff-Mehrlagensysteme, zur Trennung des Behältererzeugnisses bei Bedarf eingesetzt werden.

Bei einer besonders bevorzugten Ausführungsform der erfindungsgemäßen Trennvorrichtung sieht der kartenartige Rahmenverbund mit den einzelnen Behältererzeugnissen eine Teilung in Kopf- und Bodenteil vor, wobei jedem der dahingehenden Teile eine eigene Stanzeinrichtung zugeordnet ist, die entlang einer Transportlinie für den Rahmenverbund hintereinander angeordnet sind. Durch die separate Trennung von Kopf- und Bodenteil lassen sich auch großformatige Karten des Rahmenverbundes mit der Trennvorrichtung "bearbeiten" und durch die Auftrennung läßt sich die jeweilige Masse des Freifallkörpers einer Stanzeinrichtung reduzieren. Ein weiterer Vorteil in der Trennung besteht darin, die Stanzeinrichtung für das Kopfteil unverändert für jede Rahmenverbundgröße beizubehalten und die Stanzeinrichtung für das jeweilige Bodenteil des Rahmenverbundes wird geändert, je nachdem, wie groß der Ampullenkörper von seiner Länge her ist in Abhängigkeit von der jeweils aufzunehmenden Fluidmenge. Dergestalt lassen sich Einstellarbeiten für die Trennvorrichtung reduzieren, sofern man mit einer Trennvorrichtung verschiedene Arten oder Größen an Behältererzeugnissen vom Rahmenabfall trennen möchte. Selbstverständlich kann auch das Fußteil beibehalten und das Kopfteil geändert werden, sofern dies notwendig ist.

In vorteilhafter Weise wird über in der Transportlinie hintereinander angeordnete Übergabeeinrichtungen nebst mindestens einer Schwenkeinrichtung der Materialfluß für den kartenartigen Rahmenverbund (Ampullenblock) zu der jeweiligen Stanzeinrichtung verbessert und insoweit die Ausstoßrate für die Trennvorrichtung erhöht.

Weitere vorteilhafte Ausführungsformen der erfindungsgemäßen Trennvorrichtung sind Gegenstand der weiteren Unteransprüche.

Im folgenden wird die erfindungsgemäße Trennvorrichtung anhand eines Ausführungsbeispiels nach der Zeichnung näher erläutert. Dabei zeigen in prinzipieller und nicht maßstäblicher Darstellung die
- Fig.1: einen in stirnseitiger Draufsicht angegebenen Rahmenver- bund, bestehend aus einem eigentlichen Ampullenblock und dem Rahmenabfall;
- Fig.2: einen vom Rahmenabfall befreiten Ampullenblock, bei dem die Einzelbehältererzeugnisse mit Zwischenwandstegen lös- bar miteinander als Handelseinheit verbunden sind;
- Fig.3: in Draufsicht eine Prinzipdarstellung der Transport- oder För- derlinie für die von einer Herstellmaschine erzeugten Ampul- len- oder Behälter mit den hintereinander angeordneten Sta- tionen der Trennvorrichtung;
- Fig.4: eine Gehäuseanordnung für die Aufnahme der Einzelstationen nach der Fig.3 in perspektivischer Ansicht;
- Fig.5: stirnseitiger Ansicht eine erste Übergabeeinrichtung;
- Fig.6: in perspektivischer Draufsicht eine Schwenkeinrichtung zum Einlegen der Behältererzeugnisse in eine erste Stanzeinrich- tung;
- Fig.7: eine teilweise Schnittdarstellung der in Blickrichtung auf die Fig.6 gesehen linken Lagerung eines Rahmenverbundes der Schwenkeinrichtung;
- Fig.8: in perspektivischer Ansicht eine modulartig aufgebaute erste Stanzeinrichtung;
- Fig.9: in perspektivischer Ansicht eine zweite Form einer Übergabe- einrichtung;
- Fig.10: in perspektivischer Ansicht den modulartigen Aufbau einer weiteren zweiten Stanzeinrichtung.

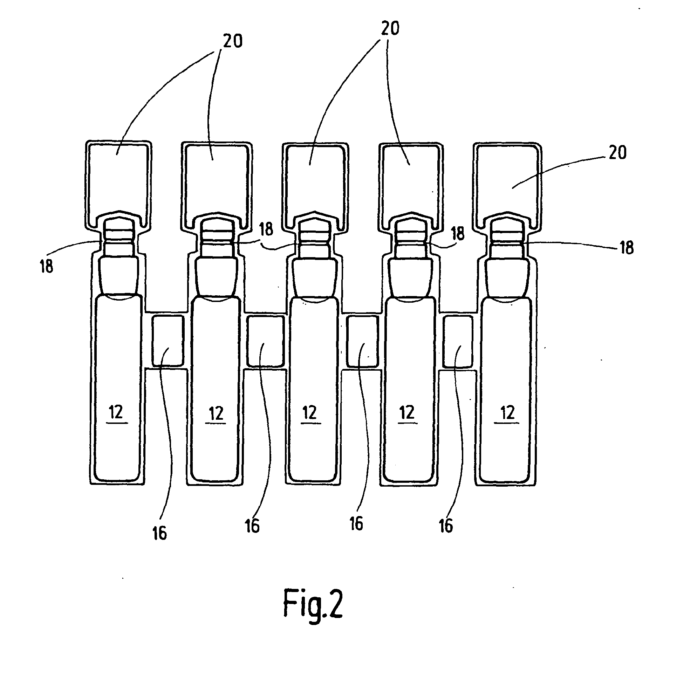

Der in den Figuren gezeigte Rahmenverbund 10 besteht aus einem Kunststoffmaterial, im vorliegenden Fall aus einem Polypropylenwerkstoff. Der Rahmenverbund 10 setzt sich grundsätzlich aus den eigentlichen Behältererzeugnissen 12 zusammen sowie dem sog. Rahmenabfall 14, der von den eigentlichen Behältererzeugnissen 12 zu trennen ist. Sind die Behältererzeugnisse 12 vom Rahmenabfall 14 getrennt, ergibt sich insoweit ein vom Rahmenabfall 14 befreiter Ampullenblock gemäß der Darstellung nach der Fig.2, wobei die einzelnen Behälter oder Einzelampullen über stehengebliebene Zwischenwandstege 16 des Rahmenabfalls 14 miteinander verbunden sind, wobei die Zwischenwandstege 16 es ermöglichen, dass das jeweilige Behältererzeugnis 12 in der Art einer Twist-off-Bewegung von den sonstigen im Block verbleibenden Behältern separiert wird.

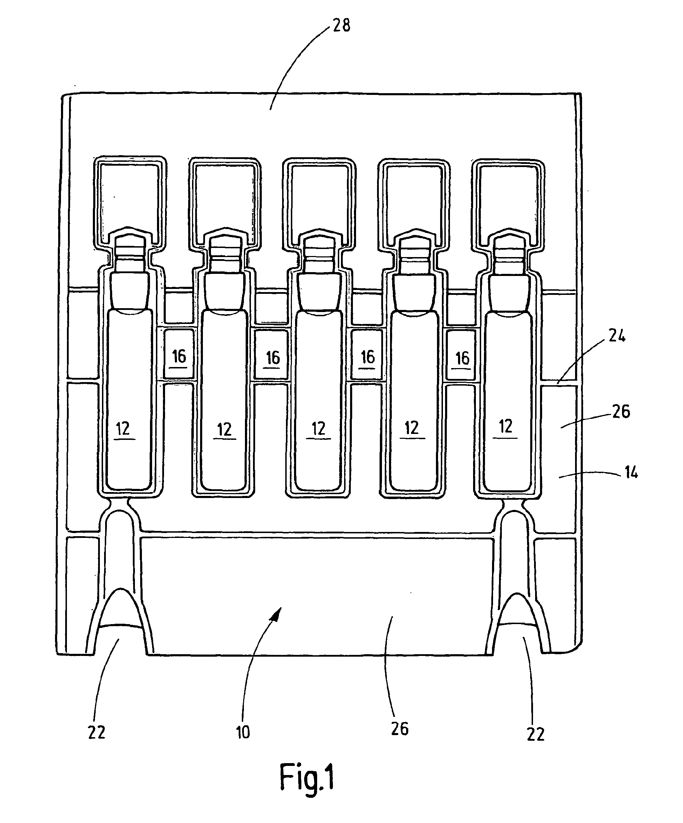

Das jeweilige Behältererzeugnis 12 ist im Stand der Technik bekannt und die vorstehend beschriebene Ampullenblocklösung ist beispielsweise in der DE 38 31 957 C1 aufgezeigt. Die in den Fig.1 und 2 gezeigte Grundform stellt nur eine Art eines Ausführungsbeispiels dar und insbesondere können die Behältergeometrien in weit gezogenem Rahmen anwenderseitig vorgegeben werden. Zur Freigabe des Behälterinhalts, regelmäßig in Form eines zuvor eingefüllten Fluids, dient ein Knebelverschluß 18, der über eine Handhabe 20 gleichfalls in der Art einer Twist-off-Bewegung vom sonstigen Behältererzeugnis über eine entsprechende Sollbruchstelle abtrennbar ist mit der Folge, dass dann über die freigelegte Behälteröffnung das Fluid entnommen werden kann. Andere Behälteröffnungslösungen, wie Tropferkappen etc., sind gleichfalls realisierbar.

An der Unterseite des Rahmenverbundes 10 gemäß Darstellung nach der Fig.1 sind Sacklöcher 22 eingebracht und mit Hilfe von Stiften einer Transporteinrichtung (nicht dargestellt), welche in die Sacklöcher 22 am unteren Rand des Rahmenabfalls 14 eingreifen, wird der Rahmenverbund 10, bestehend aus den Behältererzeugnissen 12 und dem Rahmenabfall 14, aus dem Werkzeug einer nicht näher dargestellten Herstellmaschine entnommen, wobei dank der hohen Stabilität des Rahmenabfalls wegen in Form einer in sich geschlossenen Abfallrandzone die Entnahme auch dann sicher und problemlos möglich ist, wenn der Kunststoff des Rahmenverbundes 10 noch nicht vollständig abgekühlt ist. Die dahingehende Ausgestaltung ist üblich, so dass an dieser Stelle hierauf nicht mehr näher eingegangen wird.

Wie die Fig.1 weiter zeigt, ist der Rahmenabfall 14 längs mindestens einer Trennlinie 24 zweigeteilt, wobei die dahingehende Teilung in der nicht näher dargestellten Herstellmaschine geschieht und der bodenseitige Rahmenabfall 26 läßt sich getrennt vom kopfseitigen Rahmenabfall 28 entfernen mit der Folge, dass bei der vorliegenden Ausführungsform insoweit die Zwischenwandstege 16 zwischen den Behältererzeugnissen 12 unter Bildung einer Verkaufseinheit verbleiben. Die gezeigte Lösung kann aber auch so modifiziert werden, dass insgesamt der Rahmenabfall 14 dergestalt entfernt wird, dass einzelne Behältererzeugnisse 12 die jeweilige Verkaufseinheit bilden, ohne dass diese noch miteinander verbunden wären. Welche Gestaltung man hier wählt, liegt jeweils im Ermessen des Anwenders.

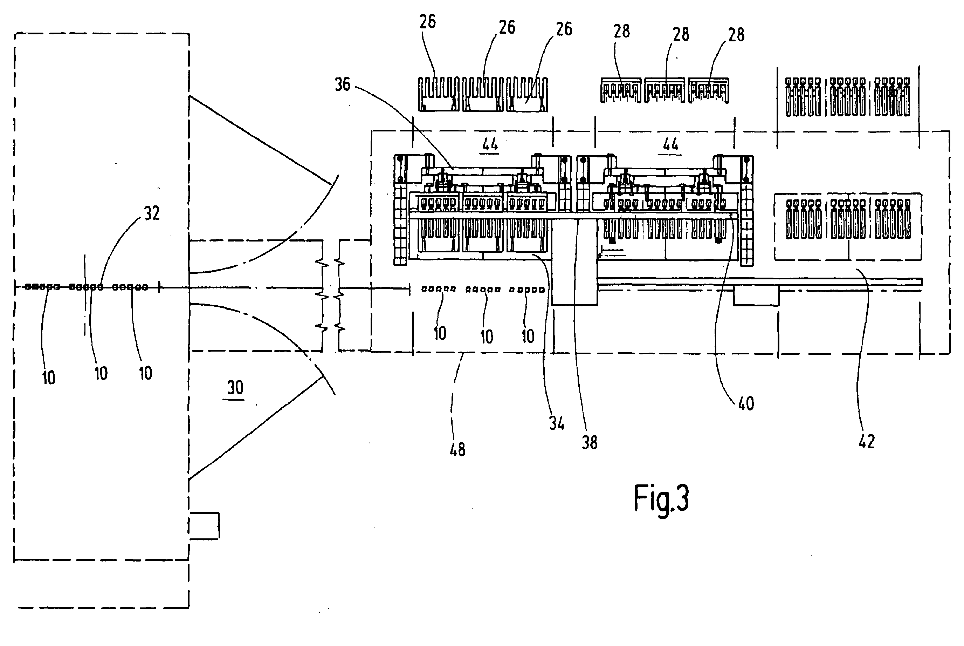

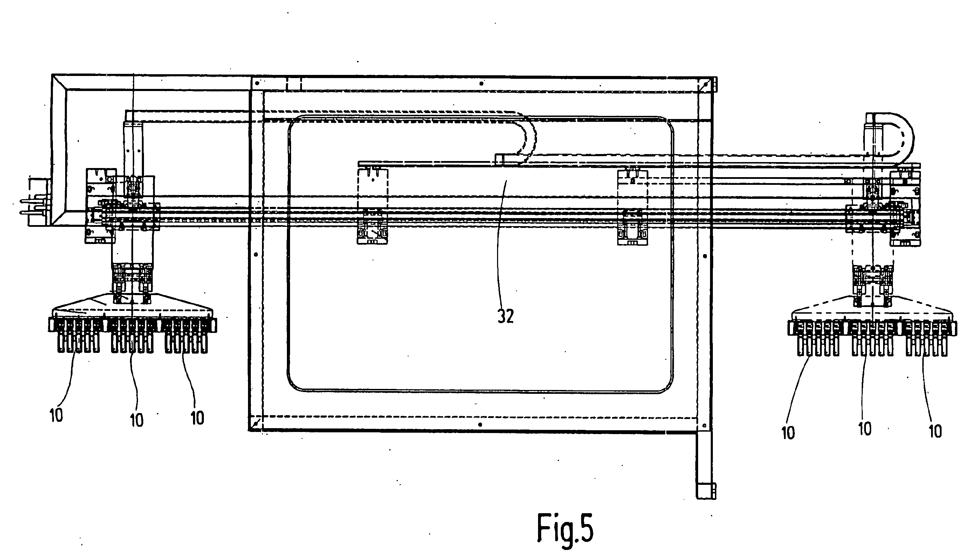

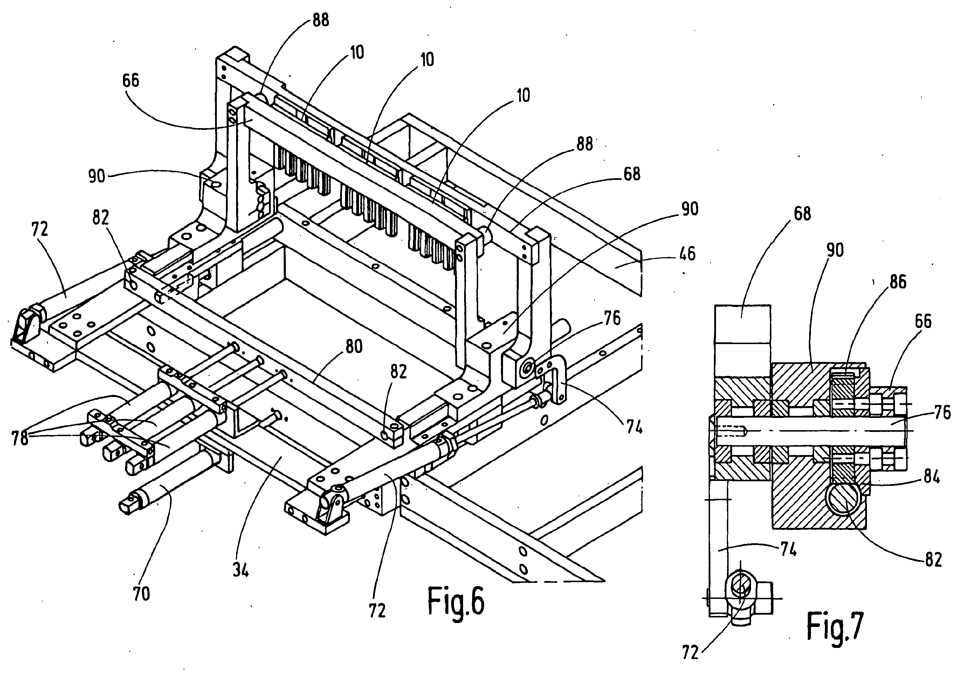

Die Fig.3 gibt in der Art einer Prinzipdarstellung und in Draufsicht die einzelnen Stationen der Gesamt-Trennvorrichtung wieder. In Blickrichtung auf die Fig.3 gesehen ist ganz links der Ausgangsbereich 30 einer Herstellmaschine zum Herstellen des Rahmenverbundes 10 gezeigt, wobei eine dahingehende Herstellmaschine beispielhaft in der DE 103 23 335 A1 beschrieben ist, so dass an dieser Stelle hierauf nicht mehr näher eingegangen wird. Eine in der Fig.5 in den wesentlichen Grundzügen dargestellte erste Übergabeeinrichtung 32 holt gleichzeitig drei Einheiten als Rahmenverbund 10 aus der Herstellmaschine ab und transportiert diese zu einer Schwenkeinrichtung 34, wie sie als Ganzes in der Fig.6 dargestellt ist.

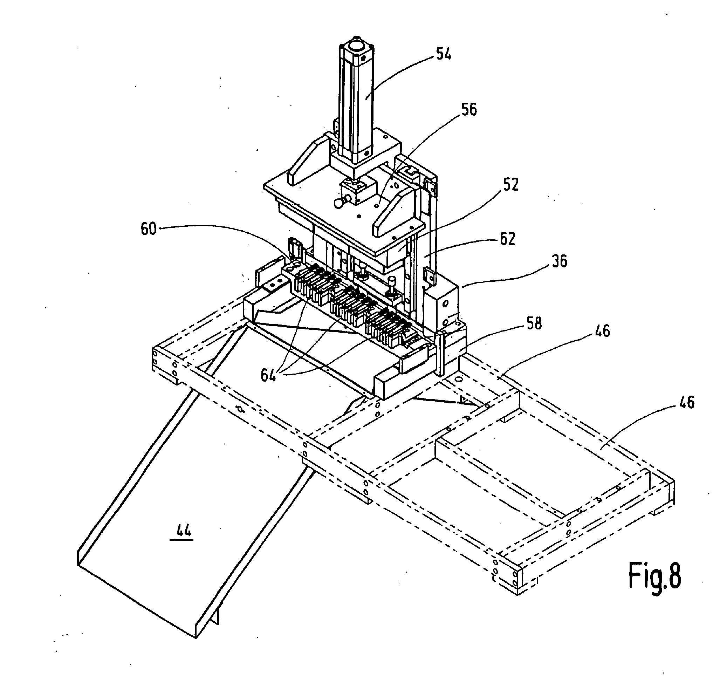

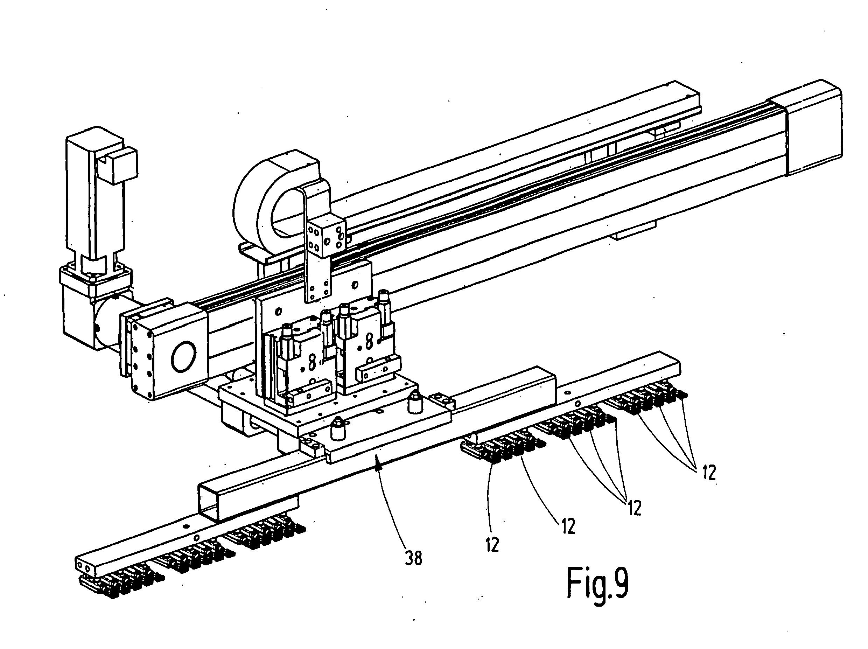

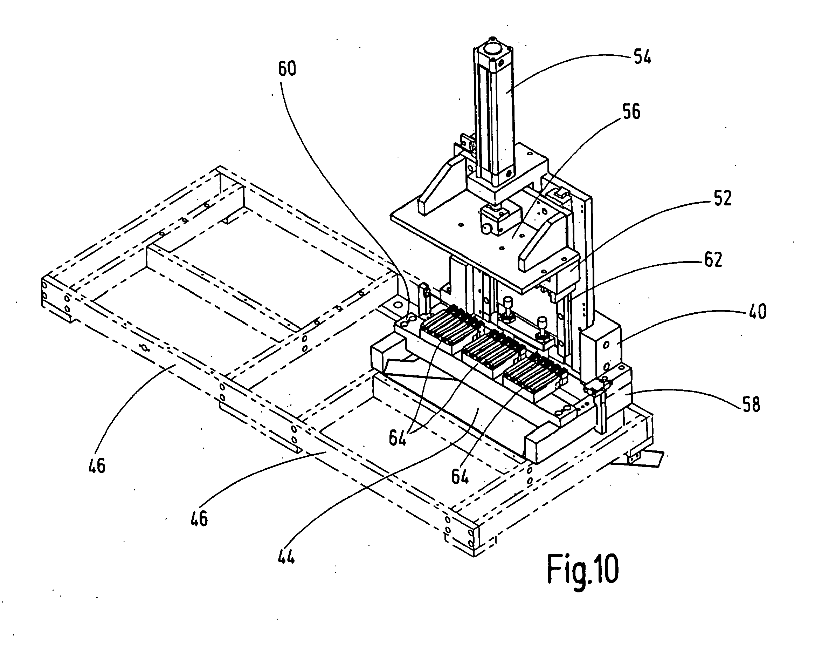

Die dahingehende Schwenkeinrichtung 34 legt den Dreifach-Rahmenverbund 10 in eine erste Stanzeinrichtung 36 gemäß der Darstellung nach der Fig.8 und mittels dieser ersten Stanzeinrichtung 36 wird der bodenseitige Rahmenabfall 26 vom jeweiligen Rahmenverbund 10 abgetrennt. Anschließend wird der jeweilige Rahmenverbund 10, noch bestehend aus den Behältererzeugnissen 12 und dem kopfseitigen Rahmenabfall 28 sowie den Zwischenwandstegen 16, mittels einer zweiten Übergabeeinrichtung 38, wie sie in der Fig.9 dargestellt ist, aus der ersten Stanzeinrichtung 36 entnommen und einer zweiten Stanzeinrichtung 40 zugeführt, wie sie in der Fig.10 detaillierter wiedergegeben ist. Anstelle des gezeigten Dreirahmenverbundes 10 könnten aber auch einzelne Ampullen mit sie umgebendem Rahmenabfall oder eine sonstige vorgebbare Anzahl an miteinander verbundenen Ampullen mittels der erfindungsgemäßen Trennvorrichtung bearbeitet werden.

Die zweite Stanzeinrichtung 40 trennt dann den kopfseitigen Rahmenabfall 28 vom verbleibenden Rahmenverbund, wie beschrieben, ab und der Behälterverbund nach der Fig.2 wird wiederum in Dreifachanordnung mittels der zweiten Übergabeeinrichtung 38 aus der zweiten Stanzeinrichtung 40 für den weiteren Abtransport an eine Entnahmestation 42 (vgl. Fig.3) übergesetzt. Anschließend kann das derart erhaltene Produkt in übliche Verpakkungen für den Handel mittels geeigneter Vorrichtungen (nicht dargestellt) eingebracht werden. Die Fig.3 gibt also in groben Zügen den Transportlinienverlauf wieder, ausgehend von der in Blickrichtung auf die Fig.3 gesehen links angeordneten Herstellmaschine mit ihrem Ausgangsbereich 30, an die sich die erste Stanzeinrichtung anschließt für den bodenseitigen Rahmenabfall 26 und nachfolgend die zweite Stanzeinrichtung 40 für den kopfseitigen Rahmenabfall 28. Bei entsprechend kleinen Behältererzeugnissen kann auch eine Stanzeinrichtung genügen, um insgesamt den Rahmenabfall 14 aus dem jeweiligen Rahmenverbund 10 abzutrennen.

Die Stanzfolge kann auch derart umgedreht werden, dass man zuerst den kopfseitigen Rahmenabfall 28 entfernt und dann den bodenseitigen Rahmenabfall 26 in Richtung der beschriebenen Transportlinie; allein die in der Fig.3 gezeigte Ausführungsform hat den Vorteil, dass man die Länge des Behältererzeugnisses 12 und mithin das Füllvolumen ändern kann, ohne dass die Geometrie der Kopfseite des Behältererzeugnisses 12 sich ändert, wobei selbstredend dann in Abhängigkeit der Ampullenlänge die in Blickrichtung auf die Fig.3 gesehen linke erste Stanzeinrichtung 36 von ihren Stanzwerkzeugen bodenseitig zu ändern ist. Über entsprechende Abfuhrschrägen 44 an der ersten Stanzeinrichtung 36 sowie der zweiten Stanzeinrichtung 40 lassen sich die genannten Abfallprodukte 26,28 aus der Trennvorrichtung abführen.

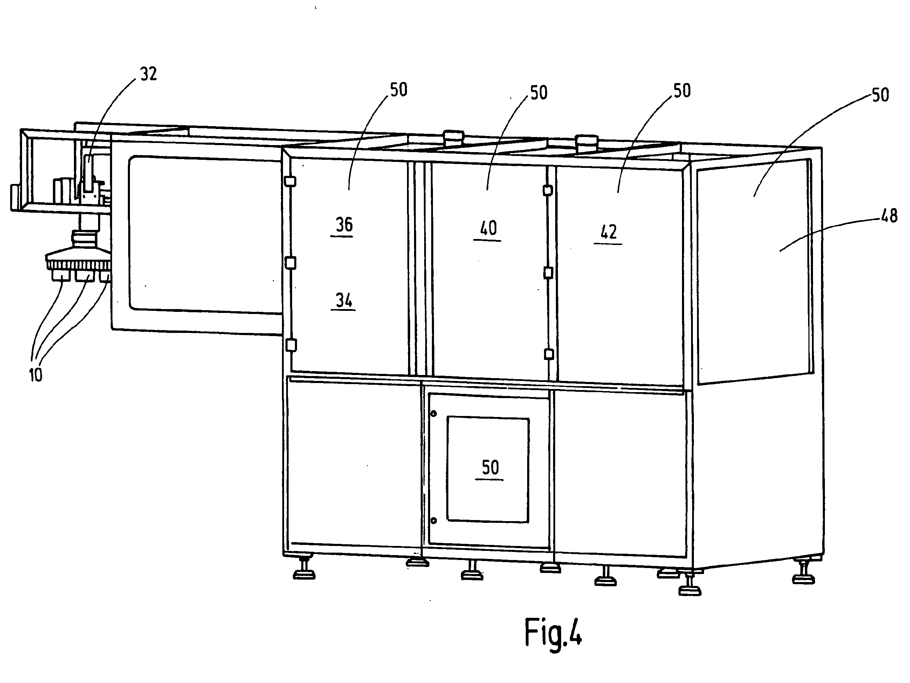

Die dahingehende Trennvorrichtung ist, wie dies insbesondere die Fig. 6, 8 und 10 verdeutlichen, modulartig unter Einsatz von Einzelmodulen 46 aufgebaut, die sich zu Wartungs- und Montagezwecken leicht austauschen lassen und sollte eine Herstellmaschine geänderte Formen für den Rahmenverbund 10 ausstoßen, kann durch die entsprechend modulare Ausgestaltung der Stanz- und Übergabeeinrichtungen sowie der Schwenkeinrichtung eine Anpassung an das geänderte Erzeugnis erfolgen. Diesem modulartigen Charakter trägt auch der in Fig.4 gezeigte schrankartige Gehäuseaufbau 48 der Trennvorrichtung Rechnung und jedem leicht zugänglichen Schrankteil ist eine Station zugeordnet. Um eine gute Einsichtnahme auf die jeweilige Station der Trennvorrichtung zu ermöglichen, kann insbesondere der in Blickrichtung auf die Fig.4 gesehen obere Teil des Gehäuseaufbaues 48 Wandsegmente 50 aus Glas aufweisen.

Die jeweilige Stanzeinrichtung nach den Fig. 8 und 10 weist jeweils einen Freifallkörper 52 auf, der eine hohe Freifallmasse aufweisen soll, beispielsweise in der Größenordnung von fünfzig und mehr Kilogramm. Auf der Unterseite des jeweiligen Freifallkörpers 52 sind relativ stumpf gehaltene leistenförmige Trennkörper (nicht dargestellt) angeordnet, die in der aufgezeigten Zweistufung die Trennung des Rahmenabfalls 14 von den eigentlichen "Behältererzeugnissen 12 vornehmen. In Blickrichtung auf die Fig.8 und 10 gesehen ist der dortige Freifallkörper 52 jeweils in seiner oberen Ausgangsstellung gezeigt und ist in der Lage, in Blickrichtung auf die Figuren gesehen in senkrechter Weise aus seiner Ausgangsstellung heraus in die Trenn- oder Stanzstellung herabzufallen. Eine Anhebeeinrichtung 54, beispielsweise in Form eines Pneumatikzylinders, ist dann wiederum in der Lage, den herabgefallenen Freifallkörper 52 aus der Stanz- oder Trennstellung in die in den Fig. 8 und 10 gezeigte Ausgangsstellung rasch zurückzuholen. Hierfür ist der Freifallkörper 52 an einer Fallplatte 56 angelenkt, an der der Pneumatikzylinder mit seiner Kolbenstange angreift.

Wie die Fig. 8 und 10 weiter zeigen, ist die jeweilige Stanzeinrichtung 36,40 mit einem winkelförmigen Grundkörper 58 versehen, längs dessen horizontal angeordnetem Fußteil 60 der jeweilige Rahmenverbund 10 geführt ist, der sich parallel zum Freifallkörper 52 erstreckt, der über mindestens eine Längsführung 62 am senkrecht verlaufenden Führungsteil des Grundkörpers 58 geführt ist. Das jeweilige Fußteil 60 der Stanzeinrichtungen 36 und 40 weist jeweils Einzelaufnahmen 64 auf für jeweils drei aufzunehmende Ampullenblockanordnungen. Dabei ist die jeweilige Einzelaufnahme 64 der ersten Stanzeinrichtung 36 nach der Fig.8 dahingehend konzipiert, dass die Behältererzeugnisse 12 an ihrem Kopfteil mit dem Knebelverschluß in der Einzelaufnahme 64 gehalten sind und im Bereich des eigentlichen Behälters mit dem aufgenommenen Fluid gemäß der Darstellung nach der Fig.1 der bodenseitige Rahmenabfall 26 entfernbar ist.

Bei der weiteren Stanzeinrichtung 40 nach der Fig.10 sind die Verhältnisse umgekehrt und das Behältererzeugnis 12 dann im Bereich der eigentlichen Behälteraufnahme gehalten und im kopfseitigen Bereich ist das jeweilige Behältererzeugnis 12 in der Einzelaufnahme 64 dergestalt geführt, dass die Trennkörper des Freifallkörpers 52 den kopfseitigen Rahmenabfall 28 entfernen können. In Entsprechung zu der Anzahl der Behältererzeugnisse 12 im Rahmenverbund 10 sind im vorliegenden Ausführungsbeispiel immer fünf Gegenhalter kopf- oder bodenseitig für eine Einzelaufnahme 64 vorhanden. Die Einzelaufnahmen 64 lassen sich ohne weiteres austauschen, so dass bei Umbaumaßnahmen oder im Verschleißfall etwaige Maschinenstillstandszeiten gering gehalten werden können.

Um den Materialtransport innerhalb der Transportlinie sicherstellen zu können, dienen, wie bereits aufgezeigt, verschiedene Arten an Übergabeund Schwenkeinrichtungen. Die in den Fig. 5 und 9 dargestellten Übergabeeinrichtungen, die einmal den jeweiligen Rahmenverbund 10 vertikal transportieren und einmal den zumindest teilweise ausgestanzten Ampullenblock horizontal, sind üblicher Bauart und werden insoweit an dieser Stelle nicht mehr näher beschrieben. Die erste Übergabeeinrichtung 32 nach der Fig.5 holt das von der Herstellmaschine fertig hergestellte jeweilige Rahmenverbunderzeugnis 10 ab und bringt dieses zu der Schwenkeinrichtung 34 gemäß der Darstellung nach der Fig.6. Dort werden die von der ersten Übergabeeinrichtung 32 transportierten Erzeugnisblöcke 10 an die Schwenkeinrichtung 34 übergeben und zwei schwenkbare Rahmenteile 66 und 68 klemmen den jeweiligen Rahmenverbund 10 zwischen sich fest, die insoweit in Blickrichtung auf die Fig.5 gesehen von der ersten Übergabeeinrichtung 32 in der rechten Verfahrstellung übergeben werden, wobei die gleichzeitig wiedergegebene linke Verfahrstellung dem Entnahmemodus an der Herstellmaschine entspricht.

Zum Einlegen des jeweiligen Rahmenverbundes 10 in die zuordenbaren Einzelaufnahmen 64 der ersten Stanzeinrichtung 36 lassen sich mit dem in Blickrichtung auf die Fig.6 gesehen unteren Einzelarbeitszylinder 70 die Rahmenteile 66 und 68 gemeinsam horizontal verschieben, um derart eine horizontale Zustellbewegung auf die erste Stanzeinrichtung 36 auszuführen. Ferner lassen sich die beiden Rahmenteile 66,68 mit den zwischen ihnen geklemmten Rahmenverbundteilen aus der in Blickrichtung auf die Fig.6 gesehen vertikalen Übernahmestellung mittels zweier Schwenkzylinder in die horizontale Einlegestellung verfahren, bei der der jeweilige Rahmenverbund 10 dann in die zuordenbare Einzelaufnahme 64 eingelegt wird.

Wird der jeweilige Schwenkzylinder 72 dann eingefahren, wird über einen jeweils zuordenbaren abgekröpften Schwenkhebel 74 die Rahmenteilanordnung 66,68 in Blickrichtung auf die Fig.6 gesehen im Uhrzeigersinn um eine Schwenkachse 76 verfahren. Wenn das Rahmenteil 68 jedenfalls in seiner horizontalen Lage innerhalb der ersten Stanzeinrichtung 36 zu liegen kommt, muß das darüberliegende Rahmenteil 66 zurück verschwenkt werden entgegen dem Uhrzeigersinn, um dergestalt den jeweiligen Rahmenverbund 10 in der ersten Stanzeinrichtung 36 für die Freifallbewegung des Freifallkörpers 52 mit den zuunterst angeordneten Stanzleisten freizugeben. Für die dahingehende Rückstellbewegung sind drei Arbeitszylinder 78 vorgesehen und diese wirken auf eine gemeinsame Schubstange 80 ein, die randseitig in jeweils eine Querschubstange 82 übergeht, die dergestalt mit einer Verzahnung 84 (Fig.7) kämmend mit einer Zahnradanordnung 86 in Eingriff steht, die unabhängig vom Betätigungszustand der Schwenkachse 76 die Rückschwenkung des in Blickrichtung auf die Fig.6 gesehen zuvorderst angeordneten Rahmenteils 66 erlaubt.

Für eine Zustellbewegung des Rahmenteils 66 auf das senkrecht stehende Rahmenteil 68 zu gemäß der Darstellung nach der Fig.6, um dann den jeweils mit der ersten Übergabeeinrichtung 32 eingebrachten Rahmenverbund in Dreieranordnung zu klemmen, fahren die Arbeitszylinder 78 gemeinsam ein und das Rahmenteil 66 wird so im Uhrzeigersinn in Richtung des Rahmenteils 68 geschwenkt. Dabei nimmt die gemeinsame Schubstange 80, an der die Arbeitszylinder 78 mit ihren Betätigungskolben stirnseitig angelenkt sind, die beiden randseitig im rechten Winkel angeordneten Querschubstangen 82 mit, die dann in Blickrichtung auf die Fig.7 gesehen senkrecht zur Bildebene in Richtung des Betrachters herausfahren und dabei die Zahnradanordnung 86 in einer Schwenkrichtung im Uhrzeigersinn mitnehmen. Bei einer Ausfahrbewegung der einzelnen Arbeitszylinder 78 wird das Rahmenteil 66 entgegen der vorstehend genannten Schwenkrichtung und mithin entgegen dem Uhrzeigersinn in Richtung der hierzu querverlaufenden Schubstange 80 zurückgeklappt. Ferner sind, wie die Fig.6 zeigt, Dämpferelemente 88 am Rahmenteil 66 vorgesehen, die das Anschlagen des Rahmenteils 66 am Rahmenteil 68 dämpfen und eine Art Spaltbegrenzung bilden für die klemmende kopfseitige Aufnahme des jeweiligen Rahmenverbundes 10.

Bei gleichzeitiger Einfahrbewegung der Arbeitszylinder 78 sowie der Schwenkzylinder 72 verfahren dann beide Rahmenteile 66,68 in miteinander klemmender Weise und im Uhrzeigersinn auf die erste Stanzeinrichtung 36 für den Übergabevorgang zu, wobei die dahingehende Schwenkübergabebewegung noch gekoppelt sein kann mit der axialen Längsverfahrbewegung der Gesamt-Schlitten- oder Rahmenanordnung über den Einzelarbeitszylinder 70, der dann in Richtung der ersten Stanzeinrichtung 36 verfährt. Die Fig.7 zeigt dem Grunde nach einen Längsschnitt durch den in Blickrichtung auf die Fig.6 gesehen linken Aufnahmeblock 90, der neben der Schwenkachse 76 auch die Zahnradanordnung 86 nebst Querschubstange 82 aufnimmt und insoweit am unteren Fußende die beiden Rahmenteile 66,68 voneinander separiert. Die Zahnradanordnung 86 ist in der Art einer Schenkbuchse drehbar im Aufnahmeblock 90 geführt und fest mit dem Rahmenteil 66 verbunden.

Die in Fig.9 dargestellte zweite Übergabeeinrichtung 38 holt dann von der ersten Stanzeinrichtung 36 nach der Fig.8 den verbleibenden Rahmenverbund 10 ab, der insoweit vom bodenseitigen Rahmenabfall 26 befreit ist, und setzt die dahingehenden Teile in die zuordenbaren Einzelaufnahmen 64 der zweiten Stanzeinrichtung 40 ein, in der dann der kopfseitige Rahmenabfall 28 entfernt wird. Im nächsten Übergabeschritt werden dann die fertigen Behältererzeugnisse 12 verbunden über die Zwischenwandstege 16 in die Entnahmestation 42 für den Verpackungsabtransport abgesetzt und gleichzeitig schon wieder ein neuer Rahmenverbund 10 in Dreieranordnung abgeholt, die jeweils vom bodenseitigen Rahmenabfall 26 befreit sind. Die zweite Übergabeeinrichtung 38 nach der Fig.9 arbeitet demgemäß in einer Art Zweiertaktanordnung mit gleichzeitiger Bedienung mehrerer Stationen.

Mit der erfindungsgemäßen Trennvorrichtung ergibt sich aufgrund des modulartigen Aufbaues eine gute Platzverhältnissituation für den Einsatz der diversen Übergabe- und Schwenkeinrichtungen für die Einzelstanzen. Aufgrund des modularen Charakters ist eine einfache Umrüstung durch klare Trennung von Standard- und Formatteilen erreicht und es bleibt noch genügend Raum für zusätzliche Optionen, um die Trennvorrichtung weiter auszubauen oder innerhalb von Fertigungslinien sinnfällig anpassen zu können.

## Patentansprüche

1. Trennvorrichtung zum Abtrennen einzelner Behältererzeugnisse (12) aus einem Rahmenverbund (10), der aus einem Kunststoffmaterial, insbesondere aus Polypropylen, besteht, mit mindestens einer Stanzeinrichtung (36,40), die zumindest teilweise das jeweilige Behältererzeugnis (12) von einem Rahmenabfall (14) trennt, **dadurch gekennzeichnet, dass** die Stanzeinrichtung (36,40) einen Freifallkörper (52) aufweist, der aus einer Ausgangsstellung heraus im freien Fall den jeweiligen Rahmenabfall (26,28) vom jeweiligen Behältererzeugnis (12) trennt.

2. Trennvorrichtung nach Anspruch 1, **dadurch gekennzeichnet, dass** mittels einer Anhebeeinrichtung (54) der Freifallkörper (52) in seine Ausgangsstellung anhebbar ist.

3. Trennvorrichtung nach Anspruch 1 oder 2, **dadurch gekennzeichnet, dass** der kartenartige Rahmenverbund (10) mit den einzelnen Behältererzeugnissen (12) eine Teilung in Kopf- und Bodenteil (28;26) vorsieht und dass jedem der dahingehenden Teile (28;26) eine eigene Stanzeinrichtung (36,40) zugeordnet ist, die entlang einer Transportlinie hintereinander angeordnet sind.

4. Trennvorrichtung nach einem der Ansprüche 1 bis 3, **dadurch gekennzeichnet, dass** der Freifallkörper (52) der jeweiligen Stanzeinrichtung (36,40) auf seiner dem Rahmenverbund (10) zugewandten Unterseite stumpf gehaltene, leistenförmige Trennkörper aufweist.

5. Trennvorrichtung nach Anspruch 4, **dadurch gekennzeichnet, dass** die Trennkörper zumindest teilweise auch den Verbund zwischen den einander benachbart angeordneten Behältererzeugnissen (12) auftrennen.

6. Trennvorrichtung nach einem der Ansprüche 1 bis 5, **dadurch gekennzeichnet, dass** die jeweilige Stanzeinrichtung (36,40) einen winkelförmigen Grundkörper (58) aufweist, längs dessen horizontal angeordnetem Fußteil (60) der jeweilige Rahmenverbund (10) geführt ist, der sich parallel zum Freifallkörper (52) erstreckt, der über mindestens eine Längsführung (62) am senkrecht verlaufenden Führungsteil des Grundkörpers (58) geführt ist.

7. Trennvorrichtung nach einem der Ansprüche 1 bis 6, **dadurch gekennzeichnet, dass** für die jeweilige Stanzeinrichtung (36,40) mindestens eine Übergabeeinrichtung (32,38) vorgesehen ist und dass zumindest eine der Übergabeeinrichtungen (32) mit einer Schwenkeinrichtung (34) zusammenwirkt, die den jeweiligen Rahmenverbund (10) aus einer vertikalen Transportstellung in eine horizontale Stanzstellung unterhalb des Freifallkörpers (52) einschwenkt.

8. Trennvorrichtung nach Anspruch 7, **dadurch gekennzeichnet, dass** in der Transportlinie der Schwenkeinrichtung (34) vorgeschaltet eine erste Übergabeeinrichtung (32) vorhanden ist, die den jeweiligen Rahmenverbund (10) von der Herstellmaschine kommend in vertikaler Anordnung an die Schwenkeinrichtung (34) übergibt, die mittels zweier getrennt voneinander schwenkbarer Rahmenteile (66,68) den jeweiligen Rahmenverbund (10) an seiner Kopf- oder Bodenseite (28,26) für einen boden- oder kopfseitig erfolgenden Trennvorgang festklemmt.

9. Trennvorrichtung nach Anspruch 8, **dadurch gekennzeichnet, dass** mittels einer zweiten Übergabeeinrichtung (38), die in der Transportlinie der Schwenkeinrichtung (34) nachfolgt, der jeweils boden- oder kopfseitig (26,28) vom dahingehenden Rahmenabfall (14) befreite Rahmenverbund (10) an die nachfolgende Stanzeinrichtung (40) horizontal weitergegeben wird, die kopfseitig (28) oder bodenseitig (26) den verbleibenden Rest-Rahmenabfall (14) von dem jeweiligen Behältererzeugnis (12) trennt.

10. Trennvorrichtung nach Anspruch 9, **dadurch gekennzeichnet, dass** die zweite Übergabeeinrichtung (38) das jeweils zumindest teilweise freigestanzte Behältererzeugnis (12) an der zweiten Stanzeinrichtung (40) in der Transportl inie abholt und an eine Entnahmestation (42) weitergibt.

## Claims

1. A separating device for separating individual container products (12) from a frame assembly (10) which consists of a plastic material, particularly of polypropylene, having at least one stamping device (36, 40) which at least partially separates the respective container product (12) from the frame waste (14), **characterised in that** the stamping device (36, 40) has a free fall body (52) which from an initial position in free fall separates the respective frame waste (26, 28) from the respective container product (12).

2. The separating device according to Claim 1, **characterised in that** the free fall body (52) can be raised into its initial position by a lifting means (54).

3. The separating device according to Claim 1 or 2, **characterised in that** the card-like frame assembly (10) with the individual container products (12) provides for division into a head and bottom part (28; 26) and that each of the pertinent parts (28; 26) is assigned its own stamping device (36, 40) which are arranged in succession along a transport line.

4. The separating device according to any of Claims 1 to 3, **characterised in that** the free fall body (52) of the respective stamping device (36, 40) on its bottom facing the frame assembly (10) has strip-shaped separating bodies which are kept blunt.

5. The separating device according to Claim 4, **characterised in that** the separating bodies also at least partially separate the assembly between the container products (12) which are adjacent to one another.

6. The separating device according to any of Claims 1 to 5, **characterised in that** the respective stamping device (36, 40) has an angled base body (58) along whose horizontally arranged base part (60) the respective frame assembly (10) is guided and extends parallel to the free fall body (52) which is guided via at least one lengthwise guide (62) on the vertically running guide part of the base body (58).

7. The separating device according to any of Claims 1 to 6, **characterised in that** for the respective stamping device (36, 40) there is at least one transfer means (32, 38) each and that at least one of the transfer means (32) interacts with a pivoting means (34) which pivots the respective frame assembly (10) out of a vertical transport position into a horizontal stamping position underneath the free fall body (52).

8. The separating device according to Claim 7, **characterised in that** upstream in the transport line of the pivoting means (34) there is a first transfer means (32) which transfers the respective frame assembly (10) coming from the production machine in a vertical arrangement to the pivoting means (34) which, by means of two frame parts (66, 68) which can be pivoted separately from one another, tightly clamps the respective frame assembly (10) on its head side or bottom side (28, 26) for a separating process which takes place on the bottom side or head side.

9. The separating device according to Claim 8, **characterised in that** using a second transfer means (38) which follows the pivoting means (34) in the transport line, the frame assembly (10) from which the pertinent frame waste (14) has been removed respectively on the bottom side or head side (26, 28) is horizontally transferred to the following stamping device (40) which separates the remaining frame waste (14) from the respective container product (12) on the head side (28) or the bottom side (26).

10. The separating device according to Claim 9, **characterised in that** the second transfer means (38) retrieves the container product (12) which has been at least partially stamped free on the second stamping device (40) in the transport line and transfers it to a removal station (42).

## Revendications

1. Dispositif de séparation, pour séparer des produits (12) individuels formant récipient d'un composite (10) formant cadre, qui est en une matière plastique, notamment en polypropylène, constitué d'au moins un dispositif (36, 40) de poinçonnage, qui sépare au moins en partie de produit (12) respectif formant un récipient d'une chute (14) de cadre, **caractérisé en ce que** le dispositif (36, 40) de poinçonnage comporte un corps (52) à chute libre qui, à partir d'une position de départ, sépare en chute libre la chute (26, 28) respective de cadre du produit (12) respectif formant récipient.

2. Dispositif de séparation suivant la revendication 1, **caractérisé en ce que** le corps (52) à chute libre peut, dans sa position de départ, être soulevé au moyen d'un dispositif (54) de soulèvement.

3. Dispositif de séparation suivant la revendication 1 ou 2, **caractérisé en ce que** le composite (10) formant cadre, de type à carte, prévoit, avec les divers produits (12) formant récipient, une subdivision en partie (28) de tête et en partie (26) de fond et **en ce qu'**à chacune des parties (28, 26) est associée son propre dispositif (36, 40) de poinçonnage, lesquels sont disposés les uns derrière les autres le long d'une ligne de transport.

4. Dispositif de séparation suivant l'une des revendications 1 à 3, **caractérisé en ce que** le corps (52) à chute libre du dispositif (36, 40) de poinçonnage respectif a des corps de séparation en forme de réglette, maintenus bout à bout sur son côté inférieur tourné vers le composite (10) formant cadre.

5. Dispositif de séparation suivant la revendication 4, **caractérisé en ce que** les corps de séparation séparent au moins en partie aussi le composite entre les produits (12) formant récipient disposés au voisinage des uns des autres.

6. Dispositif de séparation suivant l'une des revendications 1 à 5 , **caractérisé en ce que** le dispositif (36, 40) respectif de poinçonnage a une pièce (58) de base en forme d'équerre, le long de la partie (60) de pied horizontal de laquelle le composite (10) respectif formant cadre est guidé, qui s'étend parallèlement au corps (52) à chute libre et qui est guidée par au moins un guidage (62) longitudinal sur la partie de guidage s'étendant verticalement du corps (58) de base.

7. Dispositif de séparation suivant l'une des revendications 1 à 6 , **caractérisé en ce qu'**il est prévu pour le dispositif (36, 40) respectif de poinçonnage au moins un dispositif (32, 38) de transfert et **en ce qu'**au moins l'un des dispositifs (32) de transfert coopère avec un dispositif (34) de basculement, qui fait basculer le composite (10) respectif formant cadre d'une position de transport verticale à une position de poinçonnage horizontale en dessous du corps (52) à chute libre.

8. Dispositif de séparation suivant la revendication 7, **caractérisé en ce qu'**il y a dans la ligne de transport, en amont du dispositif (34) de basculement, un premier dispositif (32) de transfert, qui transfert le composite (10) respectif formant cadre venant de la machine de fabrication en étant disposé verticalement au dispositif (34) de basculement, lequel au moyen de deux parties (66, 68) de cadre pouvant basculer séparément l'une de l'autre serre le composite formant cadre sur son côté (28) de tête ou son côté (26) de fond pour une opération de séparation s'effectuant du côté du fond ou du côté de la tête.

9. Dispositif de séparation suivant la revendication 8, **caractérisé en ce qu'**au moyen d'un deuxième dispositif (38) de transfert, qui suit dans la ligne de transport le dispositif (4) de basculement, le composite (10) formant cadre, débarrassé de la chute (14) de cadre respectivement du côté du fond (26) ou du côté de la tête (28), est acheminé horizontalement au dispositif (40) de poinçonnage suivant, qui sépare du côté (28) de la tête ou du côté (26) du fond la chute (14) de cadre restante qui subsiste du produit (12) respectif formant récipient.

10. Dispositif de séparation suivant la revendication 9, **caractérisé en ce que** le deuxième dispositif (38) de transfert va chercher le produit (12) respectif formant récipient, au moins en partie libre de poinçonnage, sur le deuxième dispositif (40) de poinçonnage et le cède à un poste (42) de prélèvement .
